# EUROPEAN PATENT SPECIFICATION

(11) **EP 3 933 288 B1**
(45) Date of publication and mention of the grant of the patent: **25.10.2023**
(21) Application number: 19927145.3
(22) Date of filing: 26.11.2019
(51) Int. Cl.: F24F 11/36, F24F 1/0011, F24F 13/08, F24F 13/10

(54) **AIR CONDITIONER INDOOR UNIT**
KLIMAANLAGENINNENRAUMEINHEIT
UNITÉ INTÉRIEURE DE CLIMATISEUR

(30) Priority: 29.04.2019 CN 201910354030; 29.04.2019 CN 201920613842 U; 27.05.2019 CN 201920776157 U
(43) Date of publication of application: 05.01.2022
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: QI, Hongjie, Foshan, Guangdong 528311 (CN); LI, Tingxun, Foshan, Guangdong 528311 (CN)
(74) Representative: RGTH
(86) International application number: PCT/CN2019/121002
(87) International publication number: WO 2020/220658

(56) References cited:
- WO-A1-2017/168834
- CN-A- 104 566 863
- CN-A- 105 318 508
- CN-A- 106 016 450
- CN-A- 107 076 492
- CN-A- 108 474 604
- CN-A- 108 954 666
- CN-A- 109 974 090
- JP-A- H08 200 904
- JP-A- H09 318 208
- JP-A- 2014 224 612
- US-A1- 2017 198 936
- US-A1- 2017 292 744

## Description

### FIELD

The present invention relates to the field of air conditioning technologies, and more particularly to an air conditioner indoor unit.

### BACKGROUND

With application and development of air conditioning technologies, more and more cooling systems employ a refrigerant R290, i.e., propane, which can be directly obtained from liquefied petroleum gas. However, the propane has risk of combustion or explosion when encountering a heat source or open flame under certain conditions, and the air conditioner indoor unit using this type of refrigerant has potential safety hazards.

US 2017/292744 A1 provides an indoor unit for a refrigeration cycle apparatus, wherein the indoor unit comprises several temperature sensors and a refrigeration detection unit located at a position inside a fan casing of an indoor air-blowing fan, wherein the indoor air-blowing fan operates when a refrigerant leak is detected by the refrigeration detection unit, so as to disperse the leaked refrigerant in the indoor space.

US 2017/198936 A1 depicts an indoor unit of an air-conditioning apparatus, comprising an air inlet, an indoor heat exchanger, an indoor fan, and an air outlet located in this order from an upstream side in a direction that air flows inside of indoor unit. A refrigerant leakage sensor is also provided in the indoor unit, disposed upstream of the indoor heat exchanger, and/or disposed downstream of the indoor heat exchanger but upstream of the indoor fan.

The indoor unit of a refrigeration unit disclosed in JP H09 318208 A comprises a heat exchanger provided with heat transfer tubes, an outlet, flaps for adjusting the air direction of the blowing air, and refrigerant sensors. The refrigerant sensors are arranged on the flaps at the outlet of the indoor unit, and arranged at a position near a welding part of the heat transfer tubes.

CN 106 016 450 A depicts an indoor unit of an air conditioner comprising a heat exchanger, a blower, an air outlet, a ventilation passage between the blower and the air outlet, and at least one leakage detection sensor. In the different embodiments of the indoor unit, the leakage detection sensor(s) is(are) provided on different walls of the ventilation passage and/or provided inside the blower, so as to detect refrigerant that leaks out from the heat exchanger and overflows towards the air outlet.

### SUMMARY

The present invention seeks to solve at least one of the problems existing in the related art to at least some extent.

To this end, an objective of the present invention provides an air conditioner indoor unit according to claim 1. The dependent claims define preferred embodiments of the invention.

An air conditioner indoor unit according to prior art includes an air outlet; an air outlet component provided at the air outlet and configured to change outlet airflow effect of the air outlet; a heat exchange component and an air supplying component, the air supplying component being configured to make air enter the air conditioner indoor unit and exchange heat with the heat exchange component, and then make the air, after exchanging heat, flow to the air outlet component, to be blown out through the air outlet; and a detection component comprising a first detection device, the first detection device being mounted on the air outlet component and configured to detect refrigerant leakage condition of the air conditioner indoor unit.

The provision of the detection component, can improve operational safety of the air conditioner indoor unit.

According to a first aspect of the present invention, the first detection device includes a detection body and a transmission wire, the transmission wire electrically couples the detection body to an electric control board of the air conditioner indoor unit, and the air outlet component defines a wiring trough for wiring of the transmission wire.

According to an alternative aspect of the present invention, the first detection device includes a detection body and a power storage member, the power storage member is electrically coupled to the detection body, and the detection body and an electric control board of the air conditioner indoor unit are provided with no transmission wire therebetween.

In some embodiments, the air outlet component includes an air guiding plate component, the first detection device is provided at the air guiding plate component, and the air guiding plate component includes: an outer air guiding plate movably provided at the air outlet and configured to open and close the air outlet and regulate an air blowing direction of the air outlet.

In some embodiments, the outer air guiding plate includes: a body part extending in a length direction of the air outlet; and mounting parts provided at two ends of a length of the body part, the outer air guiding plate being mounted through the mounting parts, at least either the body part or the mounting parts being provided with the first detection device.

In some embodiments, the first detection device include a semiconductor gas sensor provided at a working face of a middle of the body part, and/or, the first detection device includes an infrared transmitter and an infrared receiver, the infrared transmitter being provided on an inner surface of one mounting part, the infrared receiver being provided on an inner surface of the other mounting part.

In some embodiments, the air guiding plate component further includes: an inner air guiding plate provided at an inner side of the outer air guiding plate and configured to regulate the air blowing direction of the air outlet, at least either the outer air guiding plate or the inner air guiding plate is provided with the first detection device.

In some embodiments, the air outlet component includes a louver component including a mounting plate, a louver and a coupling rod, a plurality of louvers are provided and arranged on the mounting plate, the coupling rod is coupled to the louvers, and at least one among the mounting plate, the louvers and the coupling rod is provided with the first detection device.

In some embodiments, the air outlet component includes an opening/closing door component including an opening/closing door body and a vent hole defined in the opening/closing door body, and the first detection device is provided on an inner surface of the opening/closing door body.

In some embodiments, the heat exchange component includes a refrigerant tube, and wherein the detection component comprises at least one second detection device, the second detection device being provided at the heat exchange component and being configured to detect a refrigerant leakage condition, the at least one second detection device is provided at a bend segment of the refrigerant tube, and/or at a weld of the refrigerant tube.

In some embodiments, the heat exchange component includes a fin, and the at least one second detection device is mounted on the fin.

In some embodiments, the at least one second detection device is provided below the heat exchange component.

In some embodiments, the at least one second detection device includes a first type detection device directly or indirectly mounted to the heat exchange component and in touch with the heat exchange component.

In some embodiments, the at least one second detection device includes a second type detection device directly or indirectly mounted to the heat exchange component and spaced apart from the heat exchange component.

In some embodiments, the at least one second detection device includes at least either a gas sensor or a temperature sensor.

In some embodiments, the air supplying component is located downstream of the heat exchange component, the at least one second detection device is located upstream of the air supplying component, downstream of the heat exchange component.

Additional aspects and advantages of embodiments of present invention will become apparent from the following description of the embodiments of the present invention.

### BRIEF DESCRIPTION OF THE DRAWINGS

FIG. 1 is a sectional view of an air conditioner indoor unit according to an embodiment of the present invention.
FIG. 2 is a sectional view of an air conditioner indoor unit according to an embodiment of the present invention.
FIG. 3 is a perspective view of an air guiding plate component according to an embodiment of the present invention.
FIG. 4 is a side view of the air guiding plate component illustrated in FIG. 3.
FIG. 5 is a perspective view of an air conditioner indoor unit.
FIG. 6 is an assembly view of an air guiding plate component and a first detection device according to an embodiment of the present invention.
FIG. 7 is an assembly view of an air guiding plate component and a first detection device according to an embodiment of the present invention.
FIG. 8 is an assembly view of an air guiding plate component and a first detection device according to an embodiment of the present invention.
FIG. 9 is a side sectional view of an air conditioner indoor unit according to another embodiment of the present invention.
FIG. 10 is a view showing an internal structure of an air conditioner indoor unit according to another embodiment of the present invention.
FIG. 11 is a view showing an internal structure of an air conditioner indoor unit according to another embodiment of the present invention.
FIG. 12 is a view showing an internal structure of an air conditioner indoor unit according to another embodiment of the present invention.
FIG. 13 is a view showing an internal structure of an air conditioner indoor unit according to another embodiment of the present invention.
FIG. 14 is a perspective view of an air conditioner indoor unit.
FIG. 15 is a control flow chart of an air conditioner indoor unit.

### Reference numerals:

air conditioner indoor unit 1000;
housing 1; air passage 11; air outlet 12; air inlet 13;
   air outlet component 2;
      wiring trough 20;
      air guiding plate component 21; outer air guiding plate 211; inner air guiding plate 212; support structure 213;
         body part 211a; mounting part 211b;
      louver component 22; mounting plate 221; louver 222; coupling rod 223;
      opening/closing door component 23; opening/closing door body 231; vent hole 232;
   first detection device 3;
      detection body 31; transmission wire 32; power storage member 33;
      semiconductor gas sensor 3a; infrared transmitter 3b; infrared receiver 3c;
   second detection device 4; first type detection device 4a; second type detection device 4b;
   first sensor 41; second sensor 42; third sensor 43; fourth sensor 44; air supplying component 5;
   heat exchange component 6; refrigerant tube 61; bend segment 611; weld 612; fin 62;
   electric control board 7; support component 8.

### DETAILED DESCRIPTION

Embodiments of the present invention will be described in detail and examples of the embodiments will be illustrated in the drawings, where same or similar reference numerals are used to indicate same or similar members or members with same or similar functions. The embodiments described herein with reference to drawings are explanatory, illustrative, and intended to generally understand the present invention. The embodiments shall not be construed to limit the present invention.

The following disclosure provides many different embodiments or examples to realize different structures of the present invention. To simplify the disclosure of the present invention, components and configurations in particular examples are elaborated. Of course, they are illustrative, and are not intended to limit the present invention. Additionally, the present disclosure can repeat reference numerals and/or letters in different examples. This repeat is for the purpose of simplicity and clarity, which shall not be constructed to indicate the relationships among various embodiments and/or configurations. In addition, the present disclosure provides examples of various specific processes and materials, but applicability of other processes and/or utilization of other materials are conceivable for those skilled in the art.

In the related art, some air conditioner indoor units use combustible refrigerant (such as refrigerant R29, i.e., propane). When leaked refrigerant of the air conditioner indoor unit reaches a certain concentration, explosion may occur. Hence, these air conditioner indoor units in the related art generally have a refrigerant leakage detection device to prevent danger. However, the refrigerant leakage detection device in the related art is affected by the mounting position and has poor detection effectiveness. In view of this, the present invention proposes an air conditioner indoor unit 100 which can detect the refrigerant leakage relatively in time.

Hereinafter, an air conditioner indoor unit 1000 according to embodiments of the present invention is described with reference to the accompanying drawings.

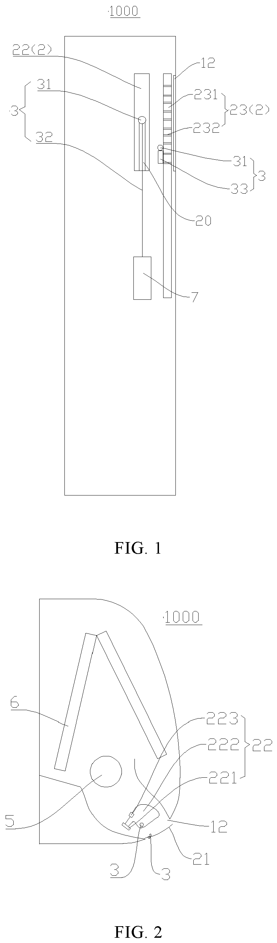

As illustrated in FIGS. 1 and 2, the air conditioner indoor unit 1000 according to embodiments of the present invention includes an air outlet 12, an air outlet component 2, an air supplying component 5 and a heat exchange component 6. The air supplying component 5 is used to make air enter the air conditioner indoor unit 1000 and exchange heat with the heat exchange component 6, and then make the air after heat exchange flow to the air outlet component 2, to be blown out through the air outlet 12. The air outlet component 2 is provided at the air outlet 12 and used to change outlet airflow effect of the air outlet 12, such as outlet airflow direction, outlet airflow rate, outlet airflow volume, etc. A first detection device 3 is mounted on the air outlet component 2.

The air conditioner indoor unit 1000 according to embodiments of the present invention may further include a second detection device 4. Hereinafter, details about the first detection device 3 are first introduced, and then details about the second detection device 4 are introduced.

As illustrated in FIGS. 1 and 2, the first detection device 3 is used to detect refrigerant leakage condition of the air conditioner indoor unit 1000. Thus, by mounting the first detection device 3 on the air outlet component 2, the first detection device 3 may be located near the air outlet 12. In this case, concentration of refrigerant detected by the first detection device 3 is concentration of refrigerant blown from an inside of air conditioner indoor unit 1000 to environment. Moreover, due to full stirring of the air supplying component 5, leaked refrigerant may be thoroughly mixed with the air and flow to the air outlet 12, and concentration of refrigerant at the air outlet 12 can represent current average concentration of the leaked refrigerant inside the air conditioner indoor unit 1000 more accurately, to speculate risk of refrigerant leakage accurately according to concentration data detected by the first detection device 3.

In addition, since the first detection device 3 is located near the air outlet 12, it is convenient for a user or maintenance personnel to detach and replace the first detection device 3, and it is ensured that the first detection device 3 is always located in a main airflow path, and the refrigerant leakage detection device 3 may always detect leakage condition of the refrigerant. Therefore, the refrigerant leakage can be detected not only when the air supplying component 5 is in operation, but also when the air supplying component 5 is stopped.

It should be noted that, the air conditioner indoor unit 1000 according to embodiments of the present disclosure has different specific types, and for example it may be an integrated air conditioner (such as a window air conditioner, a portable air conditioner, etc.) or a split air conditioner (such as a split wall-mounted air conditioner, a split cabinet air conditioner, etc.). According to the present invention, the air conditioner indoor unit 1000 at least includes an indoor unit portion adapted to be provided indoors (such as an indoor unit of the window air conditioner, an indoor unit of the split wall-mounted air conditioner, an indoor unit of the split cabinet air conditioner, etc.). Since the indoor unit portion is located indoors and indoor environment is relatively closed, there is a higher risk of exposure and the indoor unit portion may be provided with the first detection device 3, to improve use safety of the air conditioner indoor unit 1000.

Certainly, the present disclosure is not limited to this. For example, in some other embodiments not presently claimed, the air conditioner indoor unit 1000 may also include an outdoor unit portion adapted to be provided outdoors. In this case, the outdoor unit portion may also be provided with the first detection device 3, to further improve use safety of the air conditioner indoor unit 1000. The present invention only concerns the air conditioner indoor unit as defined in claim 1.

It should be noted that, what the air outlet component 2 according to embodiments of the present disclosure specifically refer to needs to be determined according to specific location of the specific air conditioner indoor unit 1000 to which the air outlet component 2 is applied. For example, in an example illustrated in FIG. 2, when the air outlet component 2 is applied to the indoor unit portion of the split wall-mounted air conditioner, the air outlet component 2 may include an air guiding plate component 21, or include an air guiding plate and a louver component 22 located at an inner side of the air guiding plate component 21. For another example, in an example illustrated in FIG. 1, when the air outlet component 2 is applied to the indoor unit portion of the split cabinet air conditioner, the air outlet component 2 may include an opening/closing door component 23 and a louver component 22 located at an inner side of the opening/closing door component 23. However, the present application is not limited to this, when the application scenario is specifically determined, those skilled in the art can know what the air outlet component 2 specifically refers to; and as long as the component is provided near the air outlet 12 and used to change the outlet airflow effect (such as outlet airflow direction, outlet airflow rate, etc.), it may be construed as the air outlet component 2 indicated herein.

In addition, it should be noted that, the number of the first detection device 3 according to embodiments of the present application is not limited, and may be specifically set according to actual requirement. Additionally, when a plurality of first detection devices 3 are provided, the mounting positions of the plurality of first detection devices 3 may be set on the same air outlet component 2, and the plurality of first detection devices 3 may also be provided on different air outlet components 2. For example, some first detection devices 3 may be provided on the louver component 22, some first detection devices 3 may be provided on the air guiding plate component 21, which is not elaborated herein. Hereinafter, some specific mounting solutions of the first detection device 3 according to embodiments of the present invention will be described.

### Embodiment 1

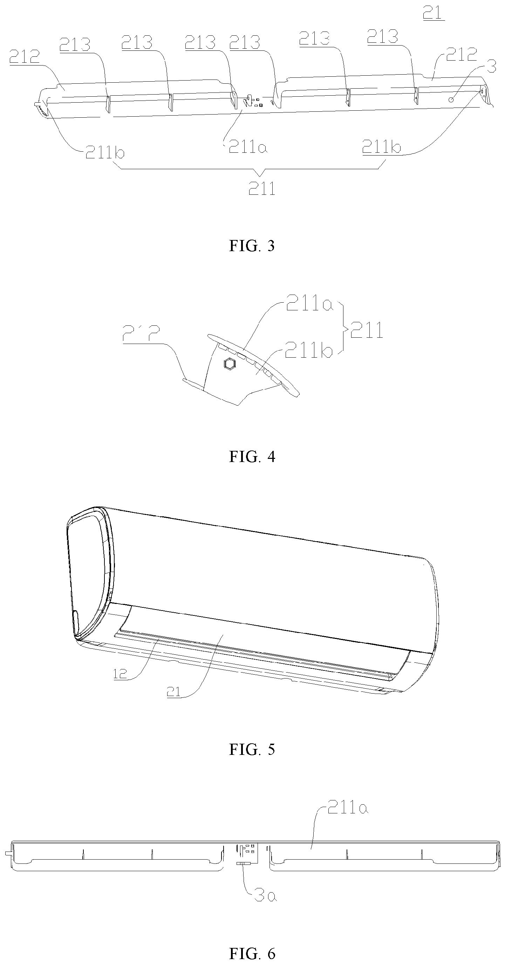

As illustrated in FIGS. 2 and 3, the air outlet component 2 may include the air guiding plate component 21. The air guiding plate component 21 includes an outer air guiding plate 211. The outer air guiding plate 211 is movably provided at the air outlet 12, and is used to open and close the air outlet 12 and adjust an air blowing direction of the air outlet 12. That is to say, the outer air guiding plate 211 at least has two functions, one is to adjust the outlet airflow direction, and the other is to open and close the air outlet 12. The first detection device 3 is provided to the air guiding plate component 21, that is, the first detection device 3 is mounted on the air guiding plate component 21, but not limited to being mounted on the outer air guiding plate 211. Thus, mounting and fixation of the first detection device 3 can be simply and effectively realized, maintenance and replacement are facilitated; furthermore, the first detection device 3 has higher detection accuracy and can perform detection when the air outlet component 2 is working or stopped.

As illustrated in FIGS. 3 and 4, the outer air guiding plate 211 may include a body part 211a and a mounting part 211b. The body part 211a extends in a length direction of the air outlet 12. For example, in an example illustrated in FIGS. 5 and 6, when the air guiding plate component 21 is applied to the indoor unit of the split wall-mounted air conditioner, the length direction of the air outlet 12 may be a horizontal direction, and in this case the length direction of the body part 211a is also the horizontal direction. For another example, when the air guiding plate component 21 is applied to the indoor unit of the split cabinet air conditioner, the length direction of the air outlet 12 may be a vertical direction, and in this case the length direction of the body part 211a is also the vertical direction. The mounting parts 211b are provided at two ends of the length of the body part 211a and used to mount the outer air guiding plate 211. That is, the outer air guiding plate 211 is mounted through the mounting parts 211b.

In a specific example of the present disclosure, the first detection device 3 may be mounted on the outer air guiding plate 211. In this case, the first detection device 3 may be mounted on at least one of the body part 211a and the mounting parts 211b. Thus, the first detection device 3 can be flexibly mounted according to different specific model selections of the first detection device 3.

For example, in some specific examples, the first detection device 3 may be mounted on the body part 211a. For example, in an example illustrated in FIG. 6, the first detection device 3 may include a semiconductor gas sensor 3a, and the semiconductor gas sensor 3a is provided on a working face of a middle of the body part 211a. Thus, the mounting space is ample, and the mounting and maintenance are convenient; furthermore mixing effect at the middle of the outer air guiding plate 211 is more uniform, and the detected concentration of refrigerant is closer to the average. Certainly, the present invention is not limited to this, the first detection device 3 may also be provided on a face of an end of the length of the body part 211a, and thus closer to a welding position of tubing of the heat exchange component 6, to detect leakage problem more quickly. In addition, in the present embodiment, the semiconductor gas sensor 3a may be a solution that "includes a detection body 31 and a power storage member 33", to avoid defining a wiring trough 20 in the body part 211a. Certainly, the present application is not limited to this, and the semiconductor gas sensor 3a may also be a solution that "includes a detection body 31 and a transmission wire 32".

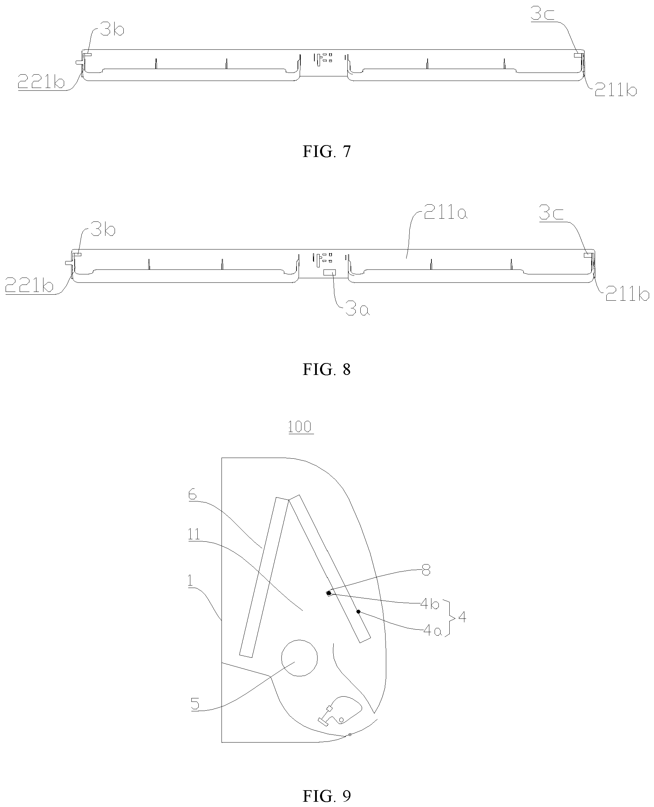

For another example, in some specific examples, the first detection device 3 may also be mounted on the mounting part 211b. For example, in an example illustrated in FIG. 7, the first detection device 3 includes an infrared transmitter 3b and an infrared receiver 3c, the infrared transmitter 3b is provided on an inner surface of one mounting part 211b, and the infrared receiver 3c is provided on an inner surface of the other mounting part 211b. Thus, the infrared transmitter 3b and the infrared receiver 3c may be spaced apart in the length direction of the air outlet 12, refrigerant leakage detection can be performed for larger area, and the detected value is further closer to the average. In addition, in the present embodiment, each of the infrared transmitter 3b and the infrared receiver 3c may be a solution that "includes a detection body 31 and a transmission wire 32". In this case, the transmission wire 32 may be directly led out from the mounting parts 211b at two sides of the body part 211a. For example, when the mounting part 211b includes a rotating shaft, the transmission wire 32 may be directly led out along the vicinity rotating shaft or from an interior of the rotating shaft, etc., to reduce the costs. Certainly, the present invention is not limited to this, each of the infrared transmitter 3b and the infrared receiver 3c may also be a solution that "includes a detection body 31 and a power storage member 33", to avoid interference with the transmission wire 32 when the air outlet component 2 moves.

Certainly, the present invention is not limited to this, when the first detection device 3 includes the infrared transmitter 3b and the infrared receiver 3c, the infrared transmitter 3b and the infrared receiver 3c may also be provided on any two support structures 213 (referring to FIG. 3) at an inner side of the outer air guiding plate 211, to be spaced apart in the length direction of the air outlet 12, which is not elaborated herein. For another example, in some specific examples, as illustrated in FIG. 8, each of the body part 211a and the mounting parts 211b may also be provided with the first detection device 3, and in this case, model selection and mounting mode of the first detection device 3 may refer to the above description, which are not limited herein. Additionally, it should be noted that, fixing and mounting mode of the first detection device 3 is not limited. For example, mounting modes such as snap-fit, screws, etc. can be employed, as long as the mounting and detachment are easy.

Additionally, when the first detection device 3 is provided on the air guiding plate component 21, the first detection device 3 is not limited to being provided on the outer air guiding plate 211. For example, in an example illustrated in FIG. 3, when the air guiding plate component 21 also includes an inner air guiding plate 212, the inner air guiding plate 212 may also be provided at the inner side of the outer air guiding plate 211, and used to adjust the air blowing direction of the air outlet 12, and at least one of the outer air guiding plate 211 and the inner air guiding plate 212 is provided with the first detection device 3. Thus, flexible mounting of the first detection device 3 can be realized. Additionally, it should be noted that, coupling mode of the outer air guiding plate 211 and the inner air guiding plate 212 is not limited, such as fixed coupling (e.g., coupling via the support structure 213 described above) or relatively movable coupling, which is not limited herein.

### Embodiment 2

As illustrated in FIG. 2, the air outlet component 2 may include a louver component 22. The louver component 22 includes a mounting plate 221, a louver 222 and a coupling rod 223. A plurality of louvers 222 are provided and arranged on the mounting plate 221, the coupling rod 223 is coupled to the louvers 222, and at least one of the mounting plate 221, the louvers 222 and the coupling rod 223 is provided with the first detection device 3. Thus, by providing the first detection device 3 on the louver component 22, it can be closer to the interior of the air conditioner indoor unit 1000, and refrigerant leakage problem can be detected more quickly, to eradicate explosion problem due to the refrigerant more quickly and completely.

### Embodiment 3

As illustrated in FIG. 1, the air outlet component 2 includes an opening/closing door component 23. The opening/closing door component 23 includes an opening/closing door body 231 and a vent hole 232 defined in the opening/closing door body 231, and when the opening/closing door body 231 is in a state of closing the air outlet 12, the airflow blown out from the air outlet component 2 can pass through the vent hole 232 in the opening/closing door body 231 to be blown out, to weaken the strength of the airflow blown out and reach a breezeless or soft air blowing effect. In the present embodiment, an inner surface of the opening/closing door body 231 may be provided with the first detection device 3. Thus, by providing the first detection device 3 on the inner surface of the opening/closing door body 231, the first detection device 3 can be prevented from being exposed, and the first detection device 3 can be protected, to ensure service life and operational reliability of the first detection device 3.

Additionally, without contradicting each other, those skilled in the art can incorporate and combine different embodiments or examples or features of different embodiments or examples described in the specification. Therefore, an embodiment obtained from any combination of the above Embodiment 1, Embodiment 2, Embodiment 3 may also be an optional embodiment set forth in the present disclosure and as long as within the scope of the claims.

In some embodiments of a first aspect of the present invention as illustrated in FIG. 1, the first detection device 3 includes a detection body 31 and a transmission wire 32. The transmission wire 32 electrically couples the detection body 31 to an electric control board 7 of the air conditioner indoor unit 1000. Thus, not only the first detection device 3 can get power from the electric control board 7 to carry out the detection work, but also the first detection device 3 can transmit data to the electric control board 7; furthermore, the electric control board 7 can accordingly regulate the air conditioner indoor unit 1000 based on the date fed back by the first detection device 3, to reduce the explosion risk and improve safety of the air conditioner indoor unit 1000. Additionally, referring to FIG.1, the air outlet component 2 (including the air guiding plate component 21, the louver component 22 and the opening/closing door component 23, as described above) may also have the wiring trough 20 for wiring of the transmission wire 32, to facilitate arrangement of the wire and improve neatness and safety of the air conditioner indoor unit 1000.

In some embodiments of an alternative second aspect of the present invention, as illustrated in FIG. 1, the first detection device 3 includes a detection body 31 and a power storage member 33 (such as an ordinary battery, a rechargeable battery, etc.), and the power storage member 33 is electrically coupled to the detection body 31. Thus, the first detection device 3 may get power from its own power storage member 33 to carry out the detection work. Thus, the first detection device 3 and the electric control board 7 may be provided with no transmission wire 32 between them, application of transmission wire 32 is avoided, the costs are reduced, and the structural simplicity and assembly efficiency are improved. Additionally, it should be noted that, in the present embodiment, the first detection device 3 may also communicate with the electric control board 7 via wireless transmission mode, the electric control board 7 can accordingly regulate the air conditioner indoor unit 1000 based on the date fed back by the first detection device 3 (specific control method can refer to the following description, but it is not limited to this), to reduce the explosion risk and improve safety of the air conditioner indoor unit 1000.

Additionally, it should be noted that, when the specific type of the air conditioner indoor unit 1000 is determined, other constitutions and operations of the air conditioner indoor unit 1000 according to embodiments of the present disclosure are known to a person of ordinary skill in the art, which will not described in detail herein.

Hereinafter, an air conditioner indoor unit 1000 according to a specific embodiment of the present application is described.

In the present embodiment, the air conditioner indoor unit 1000 is a horizontal split wall-mounted air conditioner indoor unit, the air guiding plate component 21 extends in the horizontal direction and horizontal sides thereof are fixed with the infrared transmitter 3b and the infrared receiver 3c by a certain structural form respectively, and the infrared transmitter 3b and the infrared receiver 3c are both located at a side of the air guiding plate component 21 facing the air outlet 12. A coupling line direction of the infrared transmitter 3b and the infrared receiver 3c and the length direction of the air guiding plate component 21 are each a horizontal direction and parallel to each other. An infrared signal transmitted by the infrared transmitter 3b can be received by the infrared receiver 3c, the signal can be transmitted to the electric control board 7 through the transmission wire 32, and the electric control board 7 can analyze concentration of refrigerant at the area through which the infrared signal passed according to the strength of the detected signal.

The first detection device 3 in the present embodiment can detect the concentration of refrigerant accurately whether the air guiding plate component 21 is in a closed state and in this case the air supplying component 5 is stopped, or the air guiding plate component 21 is in an open state and in this case the air supplying component 5 is in operation. Additionally, in the present embodiment, since density of the refrigerant is greater than that of the air, and the air conditioner air outlet 12 is below the indoor heat exchange component 1, the first detection device 3 can detect the refrigerant leakage not only when the air supplying component 5 is in operation but also when the air supplying component 5 is stopped.

In an embodiment of the present invention, the air conditioner indoor unit 100 as illustrated in FIG. 9, may include a housing 1, a heat exchange component 6, an air supplying component 5 and a second detection device 4. The housing 1 has an air passage 11 therein, the heat exchange component 6 is provided in the housing 1 and used to exchange heat with the airflow in the air passage 11, and the air supplying component 5 is provided in the housing 1 and used to ventilate the air passage 11. That is, an interior of the housing 1 of the air conditioner indoor unit 100 has the air passage 11, the heat exchange component 6, the air supplying component 5 and the second detection device 4, the air supplying component 5 makes the air flow from an outside of the housing 1 into the air passage 11 inside the housing 1 and make airflow in the air passage 11 be discharged to the outside of the housing 1; the heat exchange component 6 exchanges heat with the airflow in the air passage 11 to change the temperature of the airflow passing through the air passage 11, and further to change the environmental temperature after the airflow passing through the air passage 11 is discharged to the outside of the housing 1.

As illustrated in FIG. 9, the second detection device 4 is provided at the heat exchange component 6 and used to detect the refrigerant leakage condition. Herein, it should be noted that, "the second detection device 4 being provided at the heat exchange component 6" means that the second detection device 4 is provided close to the heat exchange component 6, or touches the heat exchanger 2, to ensure that the second detection device 4 is located on or near the heat exchange component 6.

Specifically, the inventors found in the real life that, the refrigerant passes through an interior of the heat exchange component 6 of the air conditioner indoor unit 100, and the refrigerant is easy to leak near the heat exchange component 6. Therefore, by providing the second detection device 4 near the heat exchange component 6 and close to the above-described refrigerant leakage position, the air conditioner indoor unit 100 according to the present invention can detect the refrigerant leakage relatively timely and effectively and improve operational safety of the air conditioner indoor unit 100.

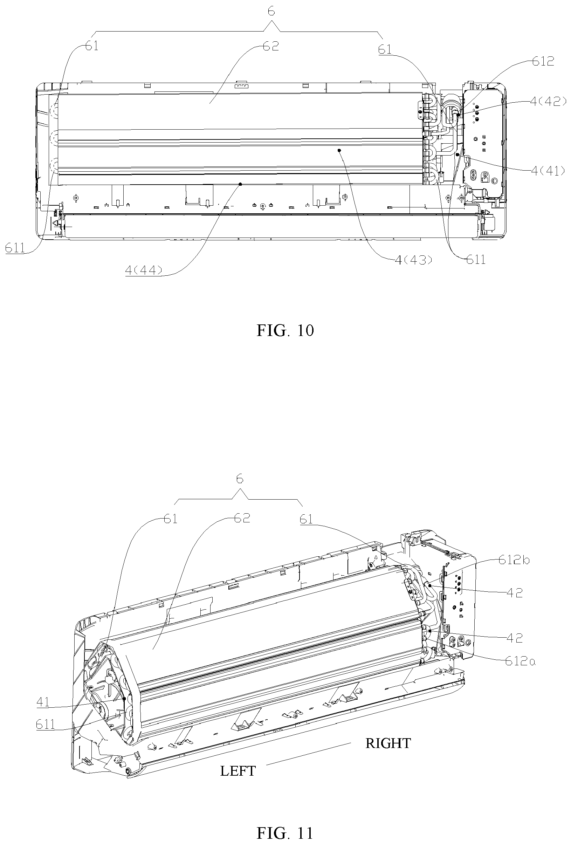

In some embodiments, as illustrated in FIG. 10, the heat exchange component 6 may include a refrigerant tube 61, and at least one second detection device 4 (such as a first sensor 41 illustrated in FIG. 10) is provided at a bend segment 611 of the refrigerant tube 61. Specifically, the inventors found in real life that, the refrigerant tube 61 of the heat exchange component 6 has the bend segment 611, and the bend segment 611 is formed by bending straight segment into the bend segment in a bending process, and thus an outside wall of at a bend of the bend segment 611 is thin and even has cracks, etc., and potential hazards of the refrigerant leakage exists. That is, the bend segment 611 of the refrigerant tube 61 is more prone to the refrigerant leakage than the straight segment of the refrigerant tube 61, and by providing at least one second detection device 4 near the bend segment 611 to detect whether the refrigerant leakage occurs at the bend segment 611 of the refrigerant tube 61, the second detection device 4 can detect the refrigerant leakage as soon as possible, i.e., more quickly, to improve the operational safety of the air conditioner indoor unit 100.

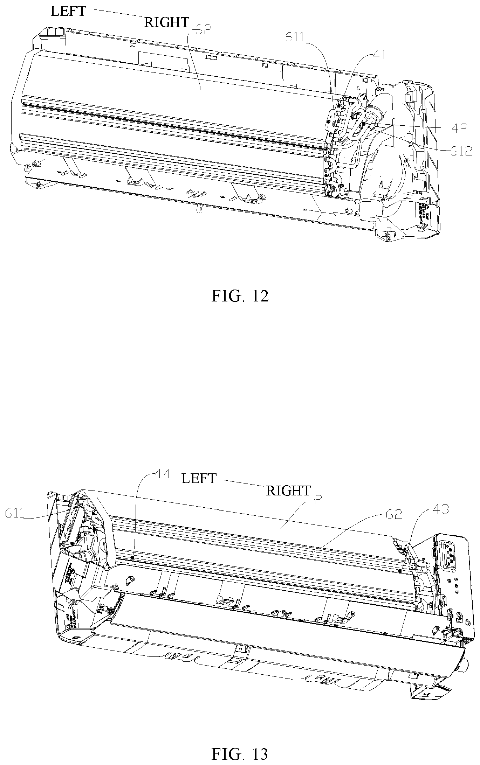

It could be understood that, the heat exchange component 6 may include a plurality of refrigerant tubes 61. For example, in an example illustrated in FIGS. 11 and 12, when the heat exchange component 6 is a fin-and-tube heat exchange component, the heat exchange component 6 includes stacked fins 62 and the refrigerant tube 61 penetrating the fins 62. A portion of the refrigerant tube 61 penetrating an inside of the fin 62 is the straight segment of the refrigerant tube 61, and portions of the refrigerant tube 61 located at two ends of the fins 62 in a stacked direction (such as a left-right direction illustrated in FIGS. 11 and 12) are mostly the bend segments 611. As illustrated in FIG. 11, the first sensor 41 may be provided at the bend segment 611 of a left side of the fin 62, and as illustrated in FIG. 12, the first sensor 41 may also be provided at the bend segment 611 of a right side of the fin 62.

In some embodiments, as illustrated in FIG. 10, the heat exchange component 6 may include the refrigerant tube 61, and at least one second detection device 4(such as a second sensor 42 illustrated in FIG. 10) is provided at a weld 612 of the refrigerant tube. Specifically, the inventors found in real life that, the refrigerant tube 61 of the heat exchange component 6 mostly employs welding as the coupling mode during arrangement. During welding the refrigerant tube 61, internal defects such as slag inclusion, porosity, etc. may generate at the weld 612 due to welding environment, and these internal defects may damage the refrigerant tube 61 at the weld 612 due to vibration or other environmental factors during transportation and operation, and potential hazards of refrigerant leakage exists. That is, the weld 612 of the refrigerant tube 61 is more prone to the refrigerant leakage than other positions of the refrigerant tube 61, and by providing at least one second detection device 4 near the weld 612, to at least detect whether the refrigerant leakage occurs at the weld 612 of the refrigerant tube 61, the second detection device 4 can detect the refrigerant leakage as soon as possible, i.e., more quickly, to improve the operational safety of the air conditioner indoor unit 100.

It could be understood that, the heat exchange component 6 may include a plurality of refrigerant tubes 61, and adjacent straight segments of the refrigerant tube 61 on the heat exchange component 6 usually form a weld 612 between them (such as a weld 612a illustrated in FIG. 11). Furthermore, the refrigerant tube 61 and other refrigerant tubes except for the heat exchange component 6 (such as an outdoor refrigerant coupling tube) usually form a weld 612 between them (such as a weld 612b illustrated in FIG. 11), at least one second detection device 4 may be provided near at least one of the above welds 612.

Additionally, for example, in an example illustrated in FIGS. 11 and 12, when the heat exchange component 6 is a fin-and-tube heat exchange component, the heat exchange component 6 may include stacked fins 62 and the refrigerant tube 61 penetrating the fins 62. A portion of the refrigerant tube 61 penetrating an inside of the fin 62 is the straight segment of the refrigerant tube 61, and portions of the refrigerant tube 61 located at two ends of the fins 62 in a stacked direction (such as a left-right direction illustrated in FIGS. 11 and 12) are mostly the bend segments 611. The bend segment 611 and the straight segment at a side of the fin 62 in the stacked direction (such as a right side illustrated in FIGS. 11 and 12) form the weld 612 by welding, and the bend segment 611 and the straight segment at the other side of the fin 62 in the stacked direction (such as a left side illustrated in FIGS. 11 and 12) may be formed by bending one same tube. As illustrated in FIG. 12, the second sensor 42 in the second detection device 4 may be provided at the weld 612 at the right side of the fin 62.

In some embodiments, as illustrated in FIG. 13, the heat exchange component 6 may include a fin 62, and at least one second detection device 4(such as a third sensor 43 illustrated in the figure) is mounted on the fin 62. Thus, by mounting at least one second detection device 4, such as the third sensor 43 on the fin 62, the heat exchange component 6 and the third sensor 43 can constitute an integral component to simplify the structure, reduce the costs and improve mounting efficiency; furthermore relative position of the third sensor 43 and the heat exchange component 6 can be more reliable, to avoid displacement, deviation, etc. of the third sensor 43 relative to the heat exchange component 6 due to vibration, etc. during transportation or use to the greatest extent and to improve operational stability and reliability of the third sensor 43.

In some embodiments, as illustrated in FIG. 13, at least one second detection device 4 (such as a fourth sensor 44 illustrated in FIG. 13) may be provided below the heat exchange component 6. Specifically, the inventors found in real life that, since the density of the refrigerant is greater than the density of the air, the leaked refrigerant will gradually diffuse downwards under its own gravity, and the corresponding second detection device 4 (such as the fourth sensor 44 illustrated in FIG. 13) can detect the refrigerant leakage more reliably, to improve the operational safety of the air conditioner indoor unit 100.

If the refrigerant leakage occurs on the heat exchange component 6, since the density of the refrigerant is greater than the density of the air, the leaked refrigerant will gradually diffuse downwards and collect in a lower area of an internal space of the housing 1, concentration of refrigerant in this area increases gradually, and safety incident may occur. Therefore, by providing the at least one second detection device 4, such as the fourth sensor 44 illustrated in FIG. 13 below the heat exchange component 6, the fourth sensor 44 may be closer to a collected position of the refrigerant, and the fourth sensor 44 can detect the refrigerant leakage more reliably to improve the operational safety of the air conditioner indoor unit 100.

It should be noted that, the type of the air conditioner indoor unit 100 is not limited. For example, the air conditioner indoor unit 100 may be a horizontal wall-mounted air conditioner, and in this case, the heat exchange component 6 may extend horizontally, and the fourth sensor 44 may be located at a lower side of a width of the fin 62 (for example, in this case the fourth sensor 44 may be mounted on the fin 62 of the heat exchange component 6). For another example, the air conditioner indoor unit 100 may also be a vertical cabinet air conditioner, and in this case, the heat exchange component 6 may extend in the vertical direction, and the fourth sensor 44 may be located at a lower side of the length of the fin 62 (for example, in this case the fourth sensor 44 may be mounted on the refrigerant tube 61 of the heat exchange component 6). These are not elaborated herein.

In some embodiments, as illustrated in FIG. 9, the second detection device 4 may include a first type detection device 4a. The first type detection device 4a is directly or indirectly mounted to the heat exchange component 6 and in touch with the heat exchange component 6. By making the first type detection device 4a be directly or indirectly mounted on the heat exchange component 6 and in touch with the heat exchange component 6, positioning difficulty can be reduced and assembly efficiency can be improved; furthermore, relative position of the first type detection device 4a and the heat exchange component 6 can be more reliable, to avoid displacement, deviation, etc. of the first type detection device 4a relative to the heat exchange component 6 due to vibration, etc. during transportation or use to the greatest extent, and to improve detection stability and reliability of the first type detection device 4a. It should be noted that, any one of the above-described first sensor 41, second sensor 42, third sensor 43, and fourth sensor 44 may be the first type detection device 4a.

In some embodiments, as illustrated in FIGS. 9 and 10, the second detection device 4 may include a second type detection device 4b. The second type detection device 4b is directly or indirectly mounted to the heat exchange component 6 and spaced apart from the heat exchange component 6, heat exchange efficiency of the heat exchange component 6 can be ensured, and relative position of the second type detection device 4b and the heat exchange component 6 can be more reliable, to avoid displacement, deviation, etc. of the second type detection device 4b relative to the heat exchange component 6 due to vibration, etc. during transportation or use to the greatest extent, and to improve detection stability and reliability of the second type detection device 4b. It should be noted that, any one of the above-described first sensor 41, second sensor 42, third sensor 43, and fourth sensor 44 may be the second type detection device 4b.

"The second detection device 4 being mounted to the heat exchange component 6" means that the second detection device 4 may be mounted at any location of the heat exchange component 6, such as the above-described bend 211, weld 612, fin 62, etc. Additionally, coupling of the second detection device 4 and the heat exchange component 6 is not limited. For example, they may be directly fixed. For instance, each of the second detection device 4 and the heat exchange component 6 is provided with a coupling lug or other structures, to realize the direct coupling, improve the assembly efficiency, and reduce the number of the parts and components. For another example, they may be indirectly fixed. For instance, the second detection device 4 may be indirectly fixed on the heat exchange component 6 by a support component 8, etc., to reduce structural complexity of the second detection device 4 and the heat exchange component 6 and reduce the costs.

In some embodiments, as illustrated in FIG. 9, a distance L between each second detection device 4 and the heat exchange component 6 is smaller than or equal to 20mm. For example, L may be 5mm, 10mm, 15mm, 20mm, etc. Thus, the second detection device 4 may be closer to the heat exchange component 6, the second detection device 4 can detect the refrigerant leakage as soon as possible, i.e., more quickly, to improve the operational safety of the air conditioner indoor unit 100. Certainly, the present invention is not limited to this, in other embodiments of the present disclosure, the distance L between the second detection device 4 and the heat exchange component 6 may also be greater than or equal to 20mm, such as 25mm, 30mm, 35mm, etc.

In some embodiments, the second detection device 4 may include at least one of a gas sensor and a temperature sensor. For example, each of the above-described first sensor 41, second sensor 42, third sensor 43, and fourth sensor 44 may be a gas sensor or temperature sensor. Thus, different actual needs can be satisfied. It could be understood that, the principle of detecting the refrigerant leakage by using the gas sensor, and the principle of detecting the refrigerant leakage by using the temperature sensor are both well known to those skilled in the art, and hence are not elaborated herein.

In some embodiments, as illustrated in FIG. 9, the air supplying component 5 is located downstream of the heat exchange component 6, the second detection device 4 is located upstream of the air supplying component 5, and the second detection device 4 is located downstream of the heat exchange component 6. That is, the second detection device 4 is provided between the air supplying component 5 and the heat exchange component 6. Thus, the refrigerant in the airflow passing through the heat exchange component 6 can be detected, the second detection device 4 can detect the refrigerant leakage as soon as possible, i.e., more quickly, to improve the operational safety of the air conditioner indoor unit 100. It should be noted that, upstream and downstream is determined according to a flow direction of the airflow, a direction of a position where the airflow passes first is the upstream, and a direction of a position where the airflow passes later is the downstream.

Additionally, the air conditioner indoor unit 100 according to embodiments of the present disclosure may also have other characteristics. The housing 1 may also have an air outlet 12 and an air inlet 13, the air outlet 12 may be located in a lower front of the housing 1, and the air inlet 13 may be located in a top of the housing 1, which however is not limited to this. Hereinafter, a control method for an air conditioner indoor unit 100 is described A control method is not part of the present invention.

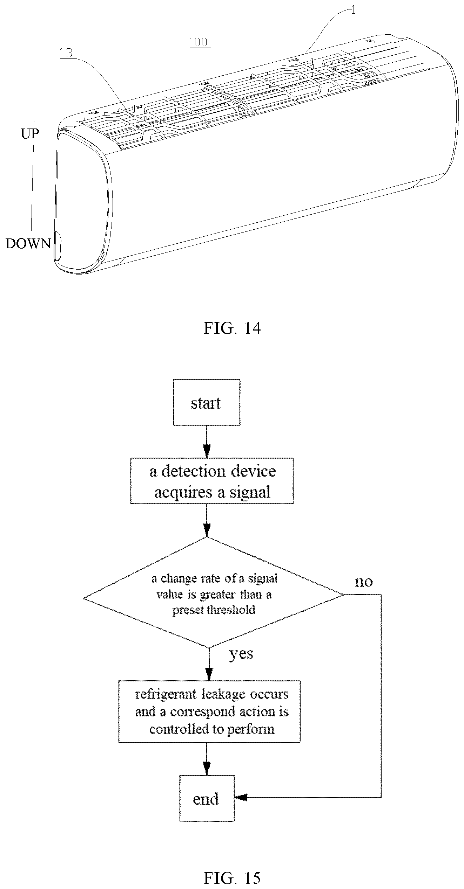

As illustrated in FIG. 15, the control method may include the following steps: detecting refrigerant leakage by a second detection device 4 (that is, the second detection device 4 acquires a signal); determining that the refrigerant leakage occurs when a change rate of a signal value (i.e., change quantity of the signal per unit time) output by the second detection device 4 is greater than a preset threshold (such as leakage threshold or danger threshold described below), and in this case a corresponding action may be performed to avoid the danger. For example, when concentration of refrigerant detected by the second detection device 4 in the air conditioner indoor unit 100 is greater than the leakage threshold, it is determined that in this case the refrigerant leakage occurs, and an indoor fan is started to diffuse the refrigerant faster (in this case if the air conditioner indoor unit 100 is in the on and operation state, the speed of the indoor fan can be increased), to realize mandatory discharge; when concentration of refrigerant detected by the second detection device 4 is greater than the danger threshold, the power supply of the air conditioner indoor unit 100 is cut off, to avoid potential safety hazards caused by continuous power supply.

In the description of the present application, unless specified or limited otherwise, the terms "mounted," "coupled," "coupled," "fixed" and the like are used broadly, and may be, for example, direct couplings or indirect couplings via intervening structures; and may also be inner communications of two elements. The above terms can be understood by those skilled in the art according to specific situations. In the present application, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween.

Reference throughout this specification to "an embodiment," "some embodiments," "an example," "a specific example," or "some examples," means that a particular feature, structure, material, or characteristic described in connection with the embodiment or example is included in at least one embodiment or example of the present invention.

Although embodiments of the present application have been shown and illustrated, it shall be understood by those skilled in the art that various changes, modifications, alternatives and variants without departing from the principle of the present invention as defined by the claims

## Claims

1. An air conditioner indoor unit (1000), comprising:
an air outlet (12);
an air outlet component (2) provided at the air outlet (12) and configured to change an outlet airflow effect of the air outlet (12);
a heat exchange component (6) and an air supplying component (5), the air supplying component (5) being configured to make the air enter the air conditioner indoor unit (1000) and exchange heat with the heat exchange component (6), and then make the air, after exchanging heat, flow to the air outlet component (2), so as to be blown out through the air outlet (12); and
a detection component comprising a first detection device (3), the first detection device (3) being mounted on the air outlet component (2) and being configured to detect a refrigerant leakage condition of the air conditioner indoor unit (1000);
**characterized in that**
wherein the first detection device (3) comprises a detection body (31) and a transmission wire (32), the transmission wire (32) electrically couples the detection body (31) to an electric control board (7) of the air conditioner indoor unit (1000), the air outlet component (2) defines a wiring trough (20) for a wiring of the transmission wire (32); or
wherein the first detection device (3) comprises a detection body (31) and a power storage member (33), the power storage member (33) is electrically coupled to the detection body (31), the detection body (31) and an electric control board (7) of the air conditioner indoor unit (1000) are provided with no transmission wire therebetween.

2. The air conditioner indoor unit (1000) according to claim 1 , wherein the air outlet component (2) comprises an air guiding plate component (21), the first detection device (3) is provided at the air guiding plate component (21), the air guiding plate component (21) comprises:
an outer air guiding plate (211) movably provided at the air outlet (12) and configured to open and close the air outlet (12) and to regulate an air blowing direction of the air outlet (12).

3. The air conditioner indoor unit (1000) according to claim 2, wherein the outer air guiding plate (211) comprises:
a body part (211a) extending in a length direction of the air outlet (12); and
mounting parts (211b) provided at two ends of a length of the body part (211a), wherein the outer air guiding plate (211) is mounted by the mounting parts (211b), at least either the body part (211a) or the mounting parts (211b) is provided with the first detection device (3).

4. The air conditioner indoor unit (1000) according to claim 3, wherein the first detection device (3) comprise a semiconductor gas sensor (3a), the semiconductor gas sensor (3a) being provided at a working face of a middle of the body part (211a), and/or, the first detection device (3) comprises an infrared transmitter (3b) and an infrared receiver (3c), the infrared transmitter (3b) being provided on an inner surface of one mounting part (211b), the infrared receiver (3c) being provided on an inner surface of the other mounting part (211b).

5. The air conditioner indoor unit (1000) according to any one of claims 2 to 4, wherein the air guiding plate component (21) further comprises:
an inner air guiding plate (212) provided at an inner side of the outer air guiding plate (211) and configured to regulate the air blowing direction of the air outlet (12), at least either the outer air guiding plate (211) or the inner air guiding plate (212) is provided with the first detection device (3).

6. The air conditioner indoor unit (1000) according to any one of claims 1 to 5, wherein the air outlet component (2) comprises a louver component (22), wherein the louver component (22) comprises a mounting plate (221), a louver (222) and a coupling rod (223), a plurality of louvers (222) are provided and arranged on the mounting plate (221), the coupling rod (223) is coupled to the louvers (222), at least one among the mounting plate (221), the louvers (222) and the coupling rod (223) is provided with the first detection device (3).

7. The air conditioner indoor unit (1000) according to any one of claims 1 to 6, wherein the air outlet component (2) comprises an opening/closing door component (23), wherein the opening/closing door component (23) comprises an opening/closing door body (231) and a vent hole (232), the vent hole (232) being providing at the opening/closing door body (231), the first detection device (3) is provided on an inner surface of the opening/closing door body (231).

8. The air conditioner indoor unit (1000) according to any one of claims 1 to 7, wherein the heat exchange component (6) comprises a refrigerant tube (61), and wherein the detection component comprises at least one second detection device (4), the second detection device (4) being provided at the heat exchange component (6) and being configured to detect a refrigerant leakage condition, the at least one second detection device (4) is provided at a bend segment (611) of the refrigerant tube (61), and/or, the at least one second detection device (4) is provided at a weld (612) of the refrigerant tube (61).

9. The air conditioner indoor unit (1000) according to claim 8, wherein the heat exchange component (6) comprises a fin (62), the at least one second detection device (4) is mounted on the fin (62).

10. The air conditioner indoor unit (1000) according to claim 8 or 9, wherein the at least one second detection device (4) is provided below the heat exchange component (6).

11. The air conditioner indoor unit (1000) according to any one of claims 8 to 10, wherein the at least one second detection device (4) comprises a first type detection device (4a), wherein the first type detection device (4a) is directly or indirectly mounted on the heat exchange component (6), and is in contact with the heat exchange component (6); and/or wherein the at least one second detection device (4) comprises a second type detection device (4b), wherein the second type detection device (4b) is directly or indirectly mounted on the heat exchange component (6), and is spaced apart from the heat exchange component (6).

12. The air conditioner indoor unit (1000) according to any one of claims 8 to 11, wherein the at least one second detection device (4) comprises at least either a gas sensor or a temperature sensor.

13. The air conditioner indoor unit according to any one of claims 8 to 12, wherein the air supplying component (5) is located downstream of the heat exchange component (6), the at least one second detection device (4) is located upstream of the air supplying component (5) and downstream of the heat exchange component (6).

## Patentansprüche

1. Klimaanlagen-Inneneinheit (1000), umfassend:
einen Luftauslass (12);
eine Luftauslasskomponente (2), die an dem Luftauslass (12) vorgesehen und so konfiguriert ist, dass sie einen Auslassluftstromeffekt des Luftauslasses (12) verändert;
eine Wärmetauscherkomponente (6) und eine Luftzuführungskomponente (5), wobei die Luftzuführungskomponente (5) so konfiguriert ist, dass sie dafür sorgt, dass die Luft in die Klimaanlagen-Inneneinheit (1000) eintritt und Wärme mit der Wärmetauscherkomponente (6) austauscht, und dann dafür sorgt, dass die Luft nach dem Wärmetausch zur Luftauslasskomponente (2) strömt, um durch den Luftauslass (12) ausgeblasen zu werden; und
eine Erfassungskomponente umfassend eine erste Erfassungsvorrichtung (3), wobei die erste Erfassungsvorrichtung (3) an der Luftauslasskomponente (2) montiert ist und so konfiguriert ist, dass sie einen Kältemittelleckagezustand der Klimaanlagen-Inneneinheit (1000) erfasst;
**dadurch gekennzeichnet, dass**
die erste Erfassungsvorrichtung (3) einen Erfassungskörper (31) und einen Übertragungsdraht (32) umfasst, der Übertragungsdraht (32) den Erfassungskörper (31) mit einer elektrischen Steuerplatine (7) der Klimaanlagen-Inneneinheit (1000) elektrisch koppelt, die Luftauslasskomponente (2) eine Verdrahtungsrinne (20) für eine Verdrahtung des Übertragungsdrahtes (32) definiert; oder
wobei die erste Erfassungsvorrichtung (3) einen Erfassungskörper (31) und ein Energiespeicherelement (33) umfasst, das Energiespeicherelement (33) elektrisch mit dem Erfassungskörper (31) gekoppelt ist, der Erfassungskörper (31) und eine elektrische Steuerplatine (7) der Klimaanlagen-Inneneinheit (1000) ohne einen Übertragungsdraht dazwischen vorgesehen sind.

2. Klimaanlagen-Inneneinheit (1000) gemäß Anspruch 1, wobei die Luftauslasskomponente (2) eine Luftleitplattenkomponente (21) umfasst, die erste Erfassungsvorrichtung (3) an der Luftleitplattenkomponente (21) vorgesehen ist, die Luftleitplattenkomponente (21) Folgendes umfasst:
eine äußere Luftleitplatte (211), die beweglich an dem Luftauslass (12) vorgesehen ist und so konfiguriert ist, dass sie den Luftauslass (12) öffnet und schließt und eine Luftausblasrichtung des Luftauslasses (12) reguliert.

3. Klimaanlagen-Inneneinheit (1000) gemäß Anspruch 2, wobei die äußere Luftleitplatte (211) Folgendes umfasst:
einen Körperteil (21a), der sich in einer Längsrichtung des Luftauslasses (12) erstreckt; und
Montageteile (211b), die an zwei Enden einer Länge des Körperteils (211a) vorgesehen sind, wobei die äußere Luftleitplatte (211) durch die Montageteile (211b) montiert ist, zumindest entweder der Körperteil (211a) oder die Montageteile (211b) mit der ersten Erfassungsvorrichtung (3) versehen ist.

4. Klimaanlagen-Inneneinheit (1000) gemäß Anspruch 3, wobei die erste Erfassungsvorrichtung (3) einen Halbleitergassensor (3a) umfasst, wobei der Halbleitergassensor (3a) an einer Arbeitsfläche einer Mitte des Körperteils (211a) vorgesehen ist, und/oder die erste Erfassungsvorrichtung (3) einen Infrarotsender (3b) und einen Infrarotempfänger (3c) umfasst, wobei der Infrarotsender (3b) an einer Innenfläche des einen Montageteils (211b) vorgesehen ist und der Infrarotempfänger (3c) an einer Innenfläche des anderen Montageteils (211b) vorgesehen ist.

5. Klimaanlagen-Inneneinheit (1000) gemäß einem der Ansprüche 2 bis 4, wobei die Luftleitplattenkomponente (21) ferner Folgendes umfasst:
eine innere Luftleitplatte (212), die an einer Innenseite der äußeren Luftleitplatte (211) vorgesehen ist und so konfiguriert ist, dass sie die Luftausblasrichtung des Luftauslasses ( 12) reguliert, wobei zumindest entweder die äußere Luftleitplatte (211) oder die innere Luftleitplatte (212) mit der ersten Erfassungsvorrichtung (3) versehen ist.

6. Klimaanlagen-Inneneinheit (1000) gemäß einem der Ansprüche 1 bis 5, wobei die Luftauslasskomponente (2) eine Gitterkomponente (22) umfasst, wobei die Gitterkomponente (22) eine Montageplatte (221), ein Gitter (222) und eine Koppelstange (223) umfasst, eine Vielzahl von Gittern (222) vorgesehen und auf der Montageplatte (221) angeordnet sind, die Koppelstange (223) mit den Gittern (222) gekoppelt ist, mindestens eine von der Montageplatte (221), den Gittern (222) und der Koppelstange (223) mit der ersten Erfassungsvorrichtung (3) versehen ist.

7. Klimaanlagen-Inneneinheit (1000) gemäß einem der Ansprüche 1 bis 6, wobei die Luftauslasskomponente (2) eine Öffnungs-/Schließtürkomponente (23) umfasst, wobei die Öffnungs-/Schließtürkomponente (23) einen Öffnungs-/Schließtürkörper (231) und ein Entlüftungsloch (232) umfasst, wobei das Entlüftungsloch (232) an dem Öffnungs-/Schließtürkörper (231) vorgesehen ist, wobei die erste Erfassungsvorrichtung (3) an einer Innenfläche des Öffnungs-/Schließtürkörpers (231) vorgesehen ist.

8. Klimaanlagen-Inneneinheit (1000) gemäß einem der Ansprüche 1 bis 7, wobei die Wärmetauscherkomponente (6) ein Kältemittelrohr (61) umfasst, und wobei die Detektionskomponente mindestens eine zweite Erfassungsvorrichtung (4) umfasst, die zweite Erfassungsvorrichtung (4) an der Wärmetauscherkomponente (6) vorgesehen ist und so konfiguriert ist, dass sie einen Kältemittelleckagezustand erfasst, die mindestens eine zweite Erfassungsvorrichtung (4) an einem Biegungssegment (611) des Kältemittelrohrs (61) vorgesehen ist und/oder die mindestens eine zweite Erfassungsvorrichtung (4) an einer Schweißstelle (612) des Kältemittelrohrs (61) vorgesehen ist.

9. Klimaanlagen-Inneneinheit (1000) gemäß Anspruch 8, wobei die Wärmetauscherkomponente (6) eine Rippe (62) umfasst, und die mindestens eine zweite Erfassungsvorrichtung (4) an der Rippe (62) montiert ist.

10. Klimaanlagen-Inneneinheit (1000) gemäß Anspruch 8 oder 9, wobei die mindestens eine zweite Erfassungsvorrichtung (4) unterhalb der Wärmetauscherkomponente (6) vorgesehen ist.

11. Klimaanlagen-Inneneinheit (1000) gemäß einem der Ansprüche 8 bis 10, wobei die mindestens eine zweite Erfassungsvorrichtung (4) eine Erfassungsvorrichtung (4a) eines ersten Typs umfasst, wobei die Erfassungsvorrichtung (4a) des ersten Typs direkt oder indirekt an der Wärmetauscherkomponente (6) montiert ist und in Kontakt mit der Wärmetauscherkomponente (6) steht;
und/oder wobei die mindestens eine zweite Erfassungsvorrichtung (4) eine Erfassungsvorrichtung (4b) des zweiten Typs umfasst, wobei die Erfassungsvorrichtung (4b) des zweiten Typs direkt oder indirekt an der Wärmetauscherkomponente (6) montiert ist und von der Wärmetauscherkomponente (6) beabstandet ist.

12. Klimaanlagen-Inneneinheit (1000) gemäß einem der Ansprüche 8 bis 11, wobei die mindestens eine zweite Erfassungsvorrichtung (4) mindestens entweder einen Gassensor oder einen Temperatursensor umfasst.

13. Klimaanlagen-Inneneinheit gemäß einem der Ansprüche 8 bis 12, wobei sich die Luftzuführungskomponente (5) stromabwärts der Wärmetauscherkomponente (6) befindet und sich die mindestens eine zweite Erfassungsvorrichtung (4) stromaufwärts der Luftzuführungskomponente (5) und stromabwärts der Wärmetauscherkomponente (6) befindet.

## Revendications

1. Unité intérieure de climatiseur (1000), comprenant :
une sortie d'air (12) ;
un composant de sortie d'air (2) disposé au niveau de la sortie d'air (12) et configuré pour modifier un effet d'écoulement d'air de sortie de la sortie d'air (12) ;
un composant d'échange thermique (6) et un composant d'alimentation en air (5), le composant d'alimentation en air (5) étant configuré pour faire entrer l'air dans l'unité intérieure de climatiseur (1000) et pour échanger de la chaleur avec le composant d'échange thermique (6), et ensuite permettre à l'air, après l'échange de chaleur, de s'écouler vers le composant de sortie d'air (2), de manière à être soufflé à travers la sortie d'air (12) ; et
un composant de détection comprenant un premier dispositif de détection (3), le premier dispositif de détection (3) étant monté sur le composant de sortie d'air (2) et configuré pour détecter un état de fuite de réfrigérant de l'unité intérieure de climatiseur (1000) ;
**caractérisée en ce que**
le premier dispositif de détection (3) comprend un corps de détection (31) et un câble de transmission (32), le câble de transmission (32) couple électriquement le corps de détection (31) à un tableau de commande électrique (7) de l'unité intérieure de climatiseur (1000), le composant de sortie d'air (2) définit une cavité de câblage (20) pour un câblage du câble de transmission (32) ; ou
le premier dispositif de détection (3) comprend un corps de détection (31) et un élément de stockage de puissance (33), l'élément de stockage de puissance (33) est couplé électriquement au corps de détection (31), le corps de détection (31) et un tableau de commande électrique (7) de l'unité intérieure de climatiseur (1000) ne sont dotés d'aucun câble de transmission entre eux.

2. Unité intérieure de climatiseur (1000) selon la revendication 1, dans laquelle le composant de sortie d'air (2) comprend un composant de plaque de guidage d'air (21), le premier dispositif de détection (3) est disposé au niveau du composant de plaque de guidage d'air (21), le composant de plaque de guidage d'air (21) comprend :
une plaque de guidage d'air extérieure (211) disposée de façon mobile au niveau de la sortie d'air (12) et configurée pour ouvrir et fermer la sortie d'air (12) et pour réguler une direction de soufflage d'air de la sortie d'air (12).

3. Unité intérieure de climatiseur (1000) selon la revendication 2, dans laquelle la plaque de guidage d'air extérieure (211) comprend :
une partie de corps (211a) s'étendant dans une direction longitudinale de la sortie d'air (12) ; et
des parties de montage (211b) disposées à deux extrémités d'une longueur de la partie de corps (211a), dans laquelle la plaque de guidage d'air extérieure (211) est montée par les parties de montage (211b), l'une au moins parmi la partie de corps (211a) et les parties de montage (211b) est dotée du premier dispositif de détection (3).

4. Unité intérieure de climatiseur (1000) selon la revendication 3, dans laquelle le premier dispositif de détection (3) comprend un capteur de gaz semiconducteur (3a), le capteur de gaz semiconducteur (3a) étant disposé au niveau d'une face de travail d'un milieu de la partie de corps (211a), et/ou, le premier dispositif de détection (3) comprend un émetteur infrarouge (3b) et un récepteur infrarouge (3c), l'émetteur infrarouge (3b) étant disposé sur une surface intérieure d'une des parties de montage (211b), le récepteur infrarouge (3c) étant disposé sur une surface intérieure de l'autre des parties de montage (211b).

5. Unité intérieure de climatiseur (1000) selon l'une quelconque des revendications 2 à 4, dans laquelle le composant de plaque de guidage d'air (21) comprend en outre :
une plaque de guidage d'air intérieure (212) disposée sur un côté intérieur de la plaque de guidage d'air extérieure (211) et configurée pour réguler la direction de soufflage d'air de la sortie d'air (12), l'une au moins parmi la plaque de guidage d'air extérieure (211) et la plaque de guidage d'air intérieure (212) étant dotée du premier dispositif de détection (3).

6. Unité intérieure de climatiseur (1000) selon l'une quelconque des revendications 1 à 5, dans laquelle le composant de sortie d'air (2) comprend un composant déflecteur (22), dans laquelle le composant déflecteur (22) comprend une plaque de montage (221), un déflecteur (222) et une tige d'accouplement (223), une pluralité de déflecteurs (222) sont disposés et agencés sur la plaque de montage (221), la tige d'accouplement (223) est accouplée aux déflecteurs (222), l'un au moins parmi la plaque de montage (221), les déflecteurs (222) et la tige d'accouplement (223) est doté du premier dispositif de détection (3).

7. Unité intérieure de climatiseur (1000) selon l'une quelconque des revendications 1 à 6, dans laquelle le composant de sortie d'air (2) comprend un composant de porte d'ouverture/fermeture (23), le composant de porte d'ouverture/fermeture (23) comprend un corps de porte d'ouverture/fermeture (231) et un trou d'aération (232), le trou d'aération (232) étant disposé au niveau du corps de porte d'ouverture/fermeture (231), le premier dispositif de détection (3) étant disposé sur une surface intérieure du corps de porte d'ouverture/fermeture (231).

8. Unité intérieure de climatiseur (1000) selon l'une quelconque des revendications 1 à 7, dans laquelle le composant d'échange thermique (6) comprend un tube de réfrigérant (61), et dans laquelle le composant de détection comprend au moins un deuxième dispositif de détection (4), le deuxième dispositif de détection (4) étant disposé au niveau du composant d'échange thermique (6) et configuré pour détecter un état de fuite de réfrigérant, l'au moins un deuxième dispositif de détection (4) est disposé au niveau d'un segment courbé (611) du tube de réfrigérant (61), et/ou, l'au moins un deuxième dispositif de détection (4) est disposé au niveau d'une soudure (612) du tube de réfrigérant (61).

9. Unité intérieure de climatiseur (1000) selon la revendication 8, dans laquelle le composant d'échange thermique (6) comprend une ailette (62), l'au moins un deuxième dispositif de détection (4) est monté sur l'ailette (62).

10. Unité intérieure de climatiseur (1000) selon la revendication 8 ou 9, dans laquelle l'au moins un deuxième dispositif de détection (4) est disposé sous le composant d'échange thermique (6).

11. Unité intérieure de climatiseur (1000) selon l'une quelconque des revendications 8 à 10, dans laquelle l'au moins un deuxième dispositif de détection (4) comprend un premier type de dispositif de détection (4a), dans laquelle le premier type de dispositif de détection (4a) est monté directement ou indirectement sur le composant d'échange thermique (6) et est en contact avec le composant d'échange thermique (6) ;
et/ou dans laquelle l'au moins un deuxième dispositif de détection (4) comprend un deuxième type de dispositif de détection (4b), dans laquelle le deuxième type de dispositif de détection (4b) est monté directement ou indirectement sur le composant d'échange thermique (6) et est espacé du composant d'échange thermique (6).

12. Unité intérieure de climatiseur (1000) selon l'une quelconque des revendications 8 à 11, dans laquelle l'au moins un deuxième dispositif de détection (4) comprend au moins soit un capteur de gaz soit un capteur de température.

13. Unité intérieure de climatiseur selon l'une quelconque des revendications 8 à 12, dans laquelle le composant d'alimentation en air (5) se situe en aval du composant d'échange thermique (6), l'au moins un deuxième dispositif de détection (4) se situe en amont du composant d'alimentation en air (5) et en aval du composant d'échange thermique (6).
